# EUROPEAN PATENT APPLICATION

(11) **EP 0 769 856 A2**
(43) Date of publication of application: **23.04.1997**
(21) Application number: 96116531.3
(22) Date of filing: 16.10.1996
(51) Int. Cl.: H04B 7/185

(54) **Method and device for an errorfree satellite relay hop**

(30) Priority: 17.10.1995 US 545187
(71) Applicant: HE HOLDINGS, INC. dba HUGHES ELECTRONICS, Los Angeles, CA 90045-0066 (US)
(72) Inventor: Mead, Donald C., Carlsbad, CA 92008 (US)
(74) Representative: Otten, Hajo, Dr.-Ing.

(57) **Abstract**

A method and device is described herein for providing a relay hop for a digital satellite system which does not significantly degrade the signal quality. In particular, the invention includes an antenna (30) and low noise block (33) receiving a digital satellite signal, a tuner (41), a demodulator (43) generating a digital data stream (44), logic (45) detecting and correcting errors in the digital data stream (44). Forward-error-correction (FEC) bits are applied to the digital data stream (44) to detect and correct any errors in the digital data stream (44). The corrected digital data stream (48) can then have FEC bits re-supplied. The digital data stream is re-modulated (50) onto a carrier frequency for uplink to a satellite.

## Description

### BACKGROUND OF THE INVENTION

The present invention relates in general to relay hops for satellite signals. More particularly, the invention relates to earth stations capable of providing relay hops without significantly degrading the signal quality.

Satellites transmit signals based on line-of-sight propagation. A satellite in geostationary earth orbit has a line-of-sight coverage, or footprint, reaching a limited geographic part of the earth. To reach earth stations beyond a particular satellite's footprint, intermediary terrestrial relay stations have been used to hop a satellite transmission to a second satellite covering a different geographic area. A relay hop is typically situated within a first satellite footprint to receive the first satellite's downlink signal transmissions. The relay hop then uplinks the signal to the second satellite. The second satellite can then downlink the hopped signal to earth receivers within its line-of-sight footprint.

Terrestrial relay hops, however, have always degraded the quality of the relayed signal. A relay hop antenna first receives an analog carrier signal from a satellite. When the antenna receives the intended signals, it also adds an unavoidable amount of thermal noise. The relay hop down-converts the received signal and noise to a baseband frequency. The relay hop then takes the baseband signal and up-converts it to the assigned carrier frequency for uplinking to a second satellite.

The process of down-converting and up-converting the signal to and from transmission and baseband frequencies further introduces noise into the signal. Because the noise component of an analog signal cannot be completely distinguished from the information component, the noise cannot be easily detected and removed. Because digital satellite transmissions are transmitted on an analog carrier, digital signals are also susceptible to noise. The quality of the satellite signal being hopped is thus degraded. A signal undergoing multiple-hops is successively degraded by each hop and may be significantly distorted before reaching its intended destination.

Accordingly, there is a need for a terrestrial hop relay station which does not degrade the quality of the relayed signal.

### SUMMARY OF THE INVENTION

The present invention provides an improved terrestrial relay hop which can hop a satellite transmission without degrading the quality of the signal. The preferred embodiment of the present invention includes an antenna and low noise block receiving a digital satellite signal, a tuner, a demodulator generating a digital data stream, logic detecting and correcting transmission errors in the digital data stream. Unlike an analog signal, errors in a digital signal can be detected and corrected using the error-correction bits added at the transmitter. Preferably, the error correction bits utilize a concatenated Reed-Solomon/Convolutional forward-error-correction (FEC) scheme to detect and correct transmission errors. The forward-error-correction bits are applied to the digital data stream to detect and correct any errors in the digital data stream. The corrected digital data stream then has new FEC bits re-supplied. Preferably, the FEC digital data stream is then re-modulated onto a carrier frequency for uplink to another satellite.

Thus, the present invention provides an improved satellite relay hop by utilizing a forward-error-correction to correct the digital data signal. Using the present invention, the hopped signal quality is not significantly degraded.

### BRIEF DESCRIPTION OF THE DRAWINGS

Fig. 1 is a block diagram showing a satellite communication system incorporating the present invention.

Fig. 2 shows the satellite receiver interface of the earth relay hop of Fig. 1.

Fig. 3 shows a flow diagram of the earth relay hop of Fig. 1.

Fig 4. shows the digital packet stream utilized by the system of Fig. 1.

Fig. 5 shows the forward-error-correction scheme utilized by the relay hop of Fig. 1.

### DETAILED DESCRIPTION OF THE DRAWINGS

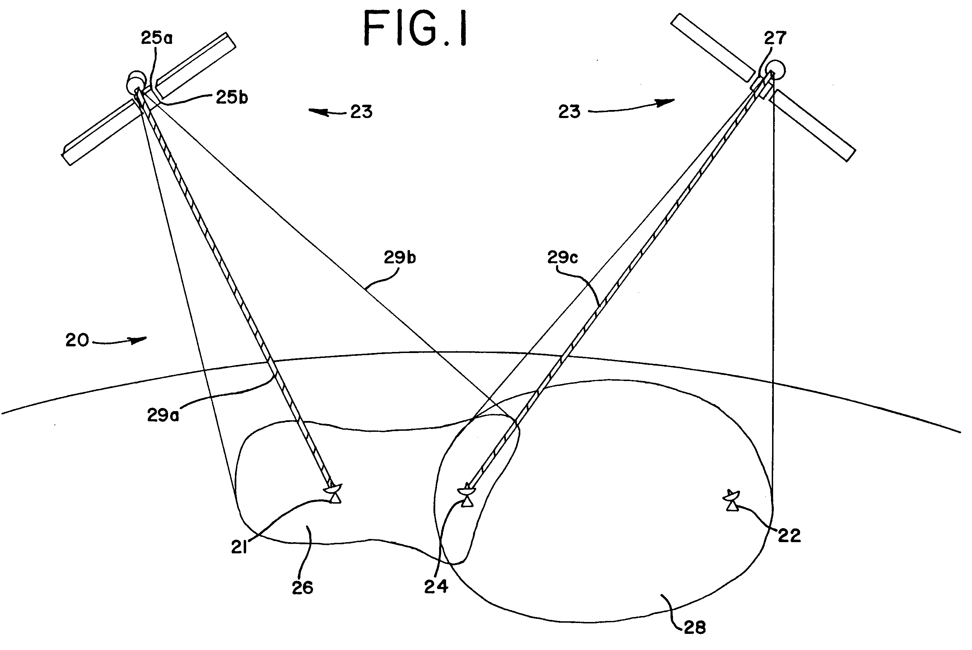

Referring now to the drawings, Fig. 1 illustrates a digital satellite system 20 capable of utilizing the present invention. The system 20 preferably includes a ground-based transmitter 21, a ground-based receiver 22, a space segment 23 and a relay hop 24. In a typical application, the direct broadcast satellites 25a and 25b generally transmit in a focused beam pattern 26. As a result, the satellite signal is not generally available outside the beam pattern 26.

Ground-based transmitter 21 preferably uplinks a digital signal 29a to satellites 25a, 25b. In a typical application, the digital signals 29a are transmitted to satellites 25a, 25b at assigned carrier frequencies between 17.3 GHz to 17.8 GHz. For a direct broadcast satellite (DBS) system, the uplink 29a preferably consists of a plurality of 40 Mbps digital signal carriers having an analog bandwidth of 24 MHz. The carriers are quaternary phase shift keyed (QPSK) modulated, with a symbol rate of 20 Mega symbols/sec, to provide a total bit rate of 40 Mbps.

Satellites 25a, 25b receive and translate signal 29a to carrier frequencies between 12.2 GHz to 12.7 GHz for downlink 29b to relay hop 24. Ordinarily, satellites 25a, 25b are geostationary satellites such as Hughes® HS-601™ spacecraft positioned at a geostationary orbital location at approximately 101 degrees W longitude. In a particular embodiment, satellites 25a, 25b transmit via high-power 120 or 240 watt transponders (not shown) to enable DBS reception.

To hop the DBS signal from satellites 25a, 25b to another satellite 27, the relay hop 24 is situated within both the DBS satellites' footprint 26 and the receive footprint 28 of satellite 27. Relay hop 24 can therefore receive downlinks from satellites 25a and 25b and uplink to satellite 27. Relay hop 24 then provides a hop between ground-based transmitter 21, satellites 25a, 25b, 27 and ground-based receiver 22.

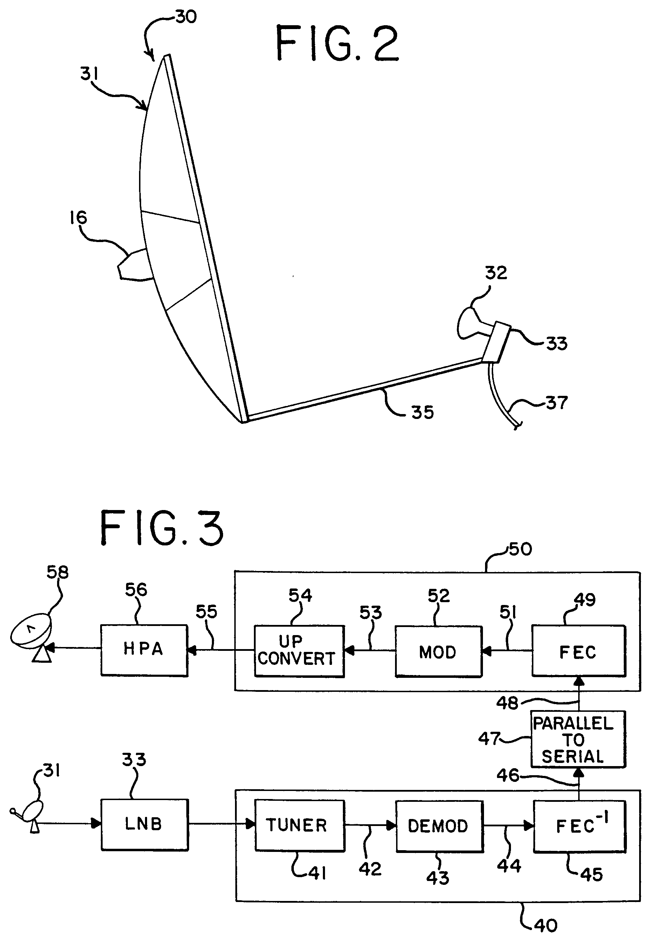

As seen in Fig. 2, the satellite receiver 30 of relay hop 24 preferably comprises an antenna 31, a feed 32, and low-noise block (LNB) 33. Antenna 31 receives the digital carrier signals 29b transmitted from satellites 25a, 25b. Antenna 31 directs the downlink signals to be received by feed 32. Preferably, antenna 31 is a parabolic offset antenna having an aperture less than 1 meter. Antennas of a lesser or greater aperture size may be used depending on the intended application or local reception conditions, as is well known in the art. In the preferred embodiment, antenna 31 has an aperture of 18 to 24 inches.

The signals focused by antenna 31 are received by feed 32 and directed to LNB 33. LNB 33 is capable of receiving left and right hand circularly polarized, QPSK modulated signals in the 12.2 to 12.7 GHz frequency range. Depending on the polarization of the received signals, linear feeds are also preferred. Feed 32 converts the focused signals to an electrical current which LNB 33 amplifies and down-converts in frequencies. LNB 33 down-converts signals to carrier frequencies between 900 MHz and 2000 MHz. The signals transmitted by LNB 33 are preferably between 950 MHz to 1450 MHz. LNB 33 also preferably has a low noise figure between 1.6 and 0.6 dB. LNBs capable of amplifying and down-converting such signals are well known in the art. The amplified and down-converted signals are then transmitted via coaxial cable 37 to an integrated receiver decoder (IRD).

As seen in Fig. 3, the indoor receiver decoder 40 comprises a tuner 41, a demodulator 43, and inverse forward-error-correction logic 45 (FEC⁻¹). Tuner 41 tunes to a selected 40 Mbps carrier signal within the preferred 950 to 1450 frequency range transmitted by LNB 33. Next, the selected 40 Mbps signal carrier 42 is decoded into a fixed-length packetized digital data stream 44 by demodulator 43.

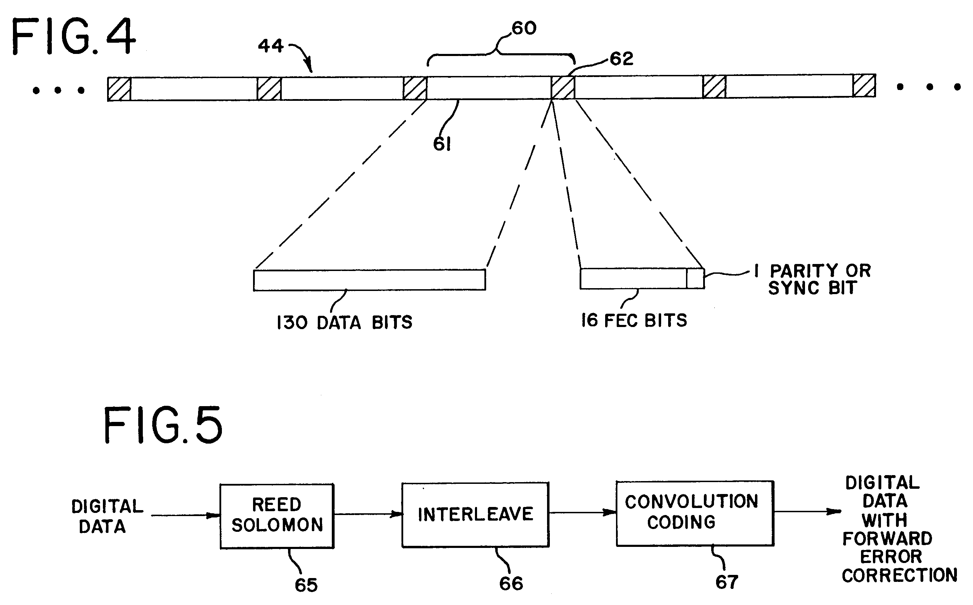

As seen in Fig. 4, the decoded packetized digital data stream 44 includes fixed-length packets 60, which is preferably comprised of both data bits 61 and forward-error-correction (FEC) bits 62. The data bits 61 can contain any type of information. For example, in typical DBS system, the data bits 61 contain MEG-2 compressed digital video data. Alternatively, the data bits 61 may contain digitally encoded audio data, such as the 44.1 KHz sampled compact digital disc format. Preferably, the fixed-length packet 60 is approximately 147 bits long, comprising approximately 130 data bits 61 and approximately 16 FEC bits 62, plus 1 parity or sync bit. The digital data stream 44 can be provided in other packet sizes, such as the asynchronous transfer mode (ATM) protocol packet size. A number of prefix or preamble bits may also be provided. Alternatively, more bits may be allocated for FEC to provide greater error correction and a more robust signal, or a lesser number of FEC bits may be allocated providing a greater rate of data transmission.

Forward error correction logic 45 is provided using circuitry or software to apply the FEC bits 62 to the data bits 61 to detect and correct transmission errors, as is well known in the art. The FEC bits 62 are applied to the data bits 61 to detect and correct transmission errors in the data bits 61.

As shown in Fig. 5, the FEC is preferably comprised of a concatenated Reed-Solomon code 65 interleaved 66 with a convolutional code 67. The concatenated error-correction codes allows for the detection and correction of errors. The combination of the Reed-Solomon and convolutional error correction codes correct both randomly occurring errors and bursty type errors. Preferably, a first encoding step 65 (outer encoding) comprises conventional Reed-Solomon coding at a 7/8 rate. The encoded bits are then interleaved 66 to widen the coding over a uniform period of time. The interleaving is ordinarily performed using random access memory (RAM) to separate the encoded bits in time. Next, the interleaved bits are preferably encoded again (inner encoding) using a convolutional code 67 at a 2/3 rate.

Of course, other FEC schemes or code rates may be used according to the desired link performance, as well known in the art. For example, a typical 40 Mbps DBS carrier with a 7/8 Reed-Solomon code rate combined with a 2/3 convolutional code rate has an information throughput rate of 23.6 Mbps. When the link quality is high and less error correction is required, a 6/7 convolutional code rate may be utilized to increase the information rate. At the 6/7 convolutional code rate, the information throughput of the 40 Mbps carrier is increased to 30.3 Mbps.

Alternatively, other cyclical forward-error-correction codes such as a Golay (23, 12) or a Golay (24, 13) code may be used. The Golay (23, 12) code corrects all patterns of 3 or less errors. The Golay (24, 12) code corrects patterns of 4 errors with only a small reduction in the information rate.

Given the preferred concatenated Reed-Solomon/Convolutional coding scheme on the transmission side, the repeater hop 24 detects and corrects errors in the received data signal 29b using conventional correlation techniques which reverse the FEC correction scheme of Fig. 5. The inverse FEC 45, or FEC⁻¹ first uses a Viterbi decoder to decode the inner-encoded bits, followed by de-interleaving to isolate the coded bits. Lastly, the Reed-Solomon outer encoded bits are decoded to obtain the error-corrected data signal.

An example of logic and software capable of performing the above-described tuning 41, decoding 43 and FEC⁻¹ 45 functions is used in the DSS® receiver, now available from RCA and SONY. Circuitry within the DSS® receiver tunes to a carrier signal 42, decodes the signal 43, and applies the FEC⁻¹ 45. The IRD 40 functions are ordinarily performed on a separate daughterboard mounted within the DSS® unit. After the FEC⁻¹ function 45 is performed, the digital data is error-corrected 46. The DSS® IRD 40 provides corrected digital data 46 in 8-bit parallel data bytes.

Next, the error-corrected data bytes 46 are preferably converted to a serial bit stream 48 through a shift register 47, as is well known in the art. As seen in Fig. 3, register 47 performs the parallel byte to serial bit conversion and outputs a serial bit stream 48.

The serial bit stream 48 is then preferably input to a modulator 50 such as any commercially available 20 Mega symbol/sec, quaternary phase shift keyed (QPSK) modulator with forward-error-correction (FEC). Preferably, the modulator 50 provides a FEC 49 to the serial bit stream 48. Preferably, the FEC 49 is an interleaved concatenated Reed-Solomon 65 code as previously described in Fig. 5. It will be understood that other FEC schemes, well known in the art, may also be used. Next, the data and FEC serial bit stream 51 is preferably modulated 52 onto a carrier signal 53 and up-converted 54 to a frequency for uplinking to a satellite. The uplink frequency assignment depends on the frequency assignment of the particular satellite intended to receive the uplink transmission.

The signal 55 from the modulator 50 is then suitable for amplification and uplinking to a satellite to provide the hopped signal. High power amplifier (HPA) 56, well known in the art, amplifies the signal 55 to an appropriate power level to be uplinked to the satellite 27. The power level of the HPA 56 varies according to the satellite 27 uplink requirements and the size of the uplink antenna. For example, a small 3 meter uplink antenna typically uses a 10 watt amplifier. A larger 10 meter antenna typically uses a 100 watt or more amplifier to provide a more robust uplink.

The present invention provides a method and device for providing an error-free digital satellite hop. Applying a FEC to the digital data allows the relay hop 24 to correct errors in the digital signal before re-transmitting the signal and propagating any errors. The error-corrected signal then has a FEC re-supplied before hopping the signal to allow the receiver 22 to correct any subsequent errors. The FEC signal can then be uplinked 29c to a satellite 27, as seen in Fig. 1. A digital satellite signal can thus be hopped without significant introduction of noise and degradation of the signal quality.

Of course, it should be understood that a wide range of changes and modifications can be made to the preferred embodiment described above. It is therefore intended that the foregoing detailed description be regarded as illustrative rather than limiting and that it be understood that it is the following claims, including all equivalents, which are intended to define the scope of this invention.

## Claims

1. A device for providing a hop for a digital satellite signal (29), comprising:
a demodulator (43) for demodulating said digital satellite signal (29) into a digital data stream (44);
logic (45) for correcting errors in said digital data stream (44); and
a modulator (52) for modulating said digital data stream (44) onto a carrier signal (53).

2. The device of claim 1, characterized in that said digital satellite signal (29) is a modulated QPSK signal.

3. The device of claim 1 or claim 2, characterized in that said logic (45) for correcting errors utilizes a forward error correction.

4. The device of any of claims 1 - 3, characterized in that said logic (45) further re-supplies a forward error correction (49).

5. The device of claim 3 or claim 4, characterized in that said forward error correction utilizes an interleaved, concatenated Reed-Solomon/Convolutional error-correction code.

6. The device of any of claims 1 - 5, characterized in that said digital data stream (44) comprises compressed digital video information.

7. A method of providing a hop for a digital satellite signal (29), comprising the steps of:
demodulating (43) a digital satellite signal (29) to determine a digital data stream (44);
correcting errors (45) in said digital data stream (44); and
modulating (52) said digital data stream (44) with a forward error correction (49) onto a carrier signal (53).

8. The method of claim 7, characterized in that the step of correcting errors (45) in said digital data stream (44) utilizes a forward error correction (45).

9. The method of claim 7 or claim 8, characterized in that the step of correcting errors (45) in said digital data stream (44) utilizes a forward error correction (45) and further re-supplies a forward error correction (49) to said digital data stream (44).

10. The method of any of claims 7 - 9, characterized in that said forward error correction utilizes an interleaved, concatenated Reed-Solomon/Convolutional error-correction code.
